# EUROPEAN PATENT SPECIFICATION

(11) **EP 3 793 767 B1**
(45) Date of publication and mention of the grant of the patent: **24.04.2024**
(21) Application number: 18918678.6
(22) Date of filing: 15.05.2018
(51) Int. Cl.: B23P 19/02, B23P 19/04, B23P 19/06, B23P 19/10, B23P 21/00, F15B 15/14

(54) **ACCUMULATOR ASSEMBLY SYSTEM**
MONTAGESYSTEM FÜR AKKUMULATOR
SYSTÈME D'ASSEMBLAGE D'ACCUMULATEUR

(30) Priority: 14.05.2018 US 201815978558
(43) Date of publication of application: 24.03.2021
(73) Proprietor: Reel Power Licensing Corp., Oklahoma City, OK 73179 (US)
(72) Inventor: BUCKMINSTER, William, Frank, Oklahoma City, OK 73179 (US); HENRY, Joseph, Oklahoma City, OK 73179 (US); WOLFE, Glenn, Oklahoma City, OK 73179 (US); WILKINS, Jimmy, Oklahoma City, OK 73179 (US); SCHMIDT, Nathan, Oklahoma City, OK 73179 (US)
(74) Representative: CSY London
(86) International application number: PCT/US2018/032643
(87) International publication number: WO 2019/221698

(56) References cited:
- EP-A1- 1 114 692
- WO-A1-2014/085552
- CN-U- 201 442 170
- DE-A1- 4 141 275
- US-A1- 2003 167 628
- US-A1- 2012 031 803
- US-A1- 2015 336 225
- US-A1- 2015 343 578
- US-A1- 2015 343 611

## Description

### Field of the Invention

In general, the present invention relates generally to alignment and installation systems. More in particular, the present invention provides an accumulator assembly system according to the preamble of claim 1 for the proper installation of large pistons in cylinder assemblies such as those used for accumulators.

### Description of the Prior Art

The installation of a large piston in a cylinder such as that used in a subsea accumulator can be difficult, and if the piston is not inserted in the cylinder directly in line with the axis of the cylinder, the resulting damage is costly. Cylinders can become scored or otherwise damaged along their inside bore, and oftentimes this damage renders the cylinder useless for its intended purpose. With large piston and cylinder assemblies, a common practice is to use a number of personnel to align and install the piston in the cylinder. This procedure is problematic, and often does not result in properly aligned piston to cylinder insertion, creating the potential for serious damage to the piston and cylinder assembly.

A similar problem exists when a large piston must be retracted and removed from a cylinder for service, replacement, or the like. In this situation, proper alignment upon removal of the piston from the cylinder is critical to prevent damage of the cylinder wall that can render the cylinder useless for anything other than scrap metal.

The document US2015/343611 A1 discloses a device which helps to properly align and install large pistons in cylinders. This document discloses an accumulator assembly system comprising the features of the preamble of claim 1.

What is needed is an assembly system for a piston and cylinder, such as an accumulator, that has a number of alignment mechanisms to ensure that the piston is properly inserted in the cylinder. What is also needed is an assembly fixture for a piston and cylinder, such as an accumulator, that uses a laser for precise alignment of the piston with the cylinder. What is also needed is an assembly fixture for a piston and cylinder, such as an accumulator, that reduces the number of personnel needed to insert the piston in the cylinder. What is also needed is an assembly fixture for a piston and cylinder, such as an accumulator, that can also retract a piston from a cylinder while maintaining proper alignment and preventing damage. Thus, there is a need for a new and improved fixture, apparatus and system to solve the above-mentioned needs along with other unmet needs that are encountered when inserting and removing large pistons from cylinder arrangements. The above discussed limitations in the prior art is not exhaustive. The current invention provides an inexpensive, time saving, more reliable system where the prior art fails.

### SUMMARY OF THE INVENTION

The present invention provides an accumulator assembly system according to claim 1. As such, the general purpose of the present invention, which will be described subsequently in greater detail, is to provide a new and improved accumulator assembly system which has all the advantages of the prior art devices and none and or fewer of the disadvantages.

It is, therefore, contemplated that the present invention is a system that provides an accumulator assembly fixture comprising a frame; a plurality of vee blocks attached to the frame; a laser alignment system comprising a laser and a laser alignment block having a laser alignment sight; alignment screws attached to each vee block for aligning each vee block along an insertion axis defined by the laser alignment system; a piston support carriage driven in a linear direction by a drive train; and a push rod for attaching to the piston support carriage and to a piston to be installed or removed from a cylinder.

There has thus been outlined, the more important features of the invention in order that the detailed description thereof that follows may be better understood and in order that the present contribution to the art may be better appreciated.

It is an object of the present invention to provide a new and improved accumulator assembly system for use that may provide a removable protective guide sleeve to reduce and or prevent damage to the inner threads of the accumulator during assembly.

It is a further object of the present invention to provide a new and improved accumulator assembly system, which is of a durable and reliable construction and may be utilized in numerous types of applications.

An even further object of the present invention is to provide a new and improved accumulator assembly system which is susceptible to a low cost of manufacture, which accordingly is then susceptible to low prices of sale to the consuming industry, thereby making such a system economically available to those in the industry.

Still another object of the present invention is to provide a new and improved accumulator assembly system which provides all of the advantages of the prior art while simultaneously overcoming some of the disadvantages normally associated therewith.

The invention will be better understood and objects other than those set forth above will become apparent when consideration is given to the following detailed description thereof.
FIG. 1 is a perspective view of the piston and cylinder assembly system of the present invention.
FIG. 2 is a perspective view of the piston and cylinder assembly system with the laser alignment system in place.
FIG. 3 is a perspective view of the piston and cylinder assembly system with a piston and a cylinder ready for assembly.
FIG. 4 is a perspective view of the piston and cylinder assembly system with a piston being inserted in a cylinder.
FIG. 5 is a perspective view of the piston and cylinder assembly system with a piston being further inserted in a cylinder and the removable vee block taken away.
FIG. 6 is a perspective view of the piston and cylinder assembly system with the piston being inserted to the limit of the piston support carriage.
FIG. 7 is a perspective view of the piston and cylinder assembly system with a push rod being used for further insertion of the piston in the cylinder.
FIG. 8 is a perspective view of the piston and cylinder assembly system with the push rod moving the piston further into the cylinder.
FIG. 9 is a top plan view of the piston and cylinder assembly system.
FIG. 10 is a side plan view of the piston and cylinder assembly system.
FIG. 11 is a cutaway view of the piston and cylinder assembly system taken along line A-A of FIG. 9.
FIG. 12 is a close up view of the chain drive assembly of the piston and cylinder assembly system.
FIG. 13 is a close up view of the drive train of the piston and cylinder assembly system.
FIG. 14 is an end view of the piston and cylinder assembly system with the cylinder and piston in place.
FIG. 15 is an end view of the piston and cylinder assembly system without as cylinder and piston in place.
FIG. 16 is an opposite end view of the piston and cylinder assembly system with a cylinder and piston in place.
FIG. 17 is a plan view of a vee block guide of the piston and cylinder assembly system.
FIG. 18 is a rotated plan view of the vee block guide of FIG. 17.
FIG. 19 is a perspective view of the vee block guide of FIG. 17.
FIG. 20 is a plan view of a removable vee block of the piston and cylinder assembly system.
FIG. 21 is a rotated plan view of the removable vee block of FIG. 20.
FIG. 22 is a perspective view of the removable vee block of FIG. 20.
FIG. 23 is a plan view of a laser alignment block of the piston and cylinder assembly system.
FIG. 24 is a rotated plan view of the laser alignment block of FIG. 23.
FIG. 25 is a perspective view of the laser alignment block of FIG. 23.
FIG. 26 is a side plan view of a carriage of the piston and cylinder assembly system.
FIG. 27 is a rotated side plan view of the carriage of FIG. 26.
FIG. 28 is a bottom plan view of the carriage of FIG. 26.
FIG. 29 is a perspective view of the carriage of FIG. 26.
FIG. 30 is an exploded detail view of an end stop bracket of the piston and cylinder assembly system.
FIG. 31 is a top plan view of a removable entrance guide protective sleeve.
FIG. 32 is a cutaway plan view of the removable entrance guide protective sleeve of FIG. 31.
FIG. 33 is a perspective view of the removable entrance guide protective sleeve attached to a cylinder while the piston is being positioned.

### DETAILED DESCRIPTION OF INVENTION

Referring to the illustrations, drawings, and pictures, reference character 100 generally designates a new and improved assembly system constructed in accordance with the present invention. Assembly system 100 is generally for the proper installation and extraction of large pistons in cylinder assemblies such as, but not limited to, those used for accumulators in deep water drilling operational and control systems.

There are various techniques for the design and construction of the assembly system 100 of the present invention. The shape, size, materials and components selected for the assembly system 100 may vary based on the intended application. It is understood that the assembly system 100 of the present invention is made from structurally significant parts capable of withstanding the forces involved in the placement, installation, and removal of large pistons and cylinders. Such materials include, for example, machined or cast steel, aluminum, brass, copper, or the like. Other materials such as plastics, carbon fiber, and the like, may also be employed as suitable.

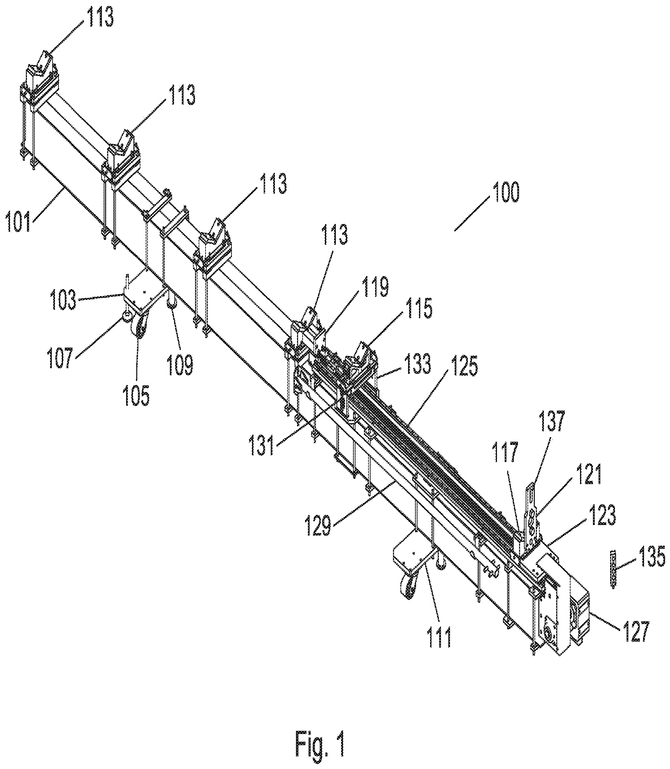

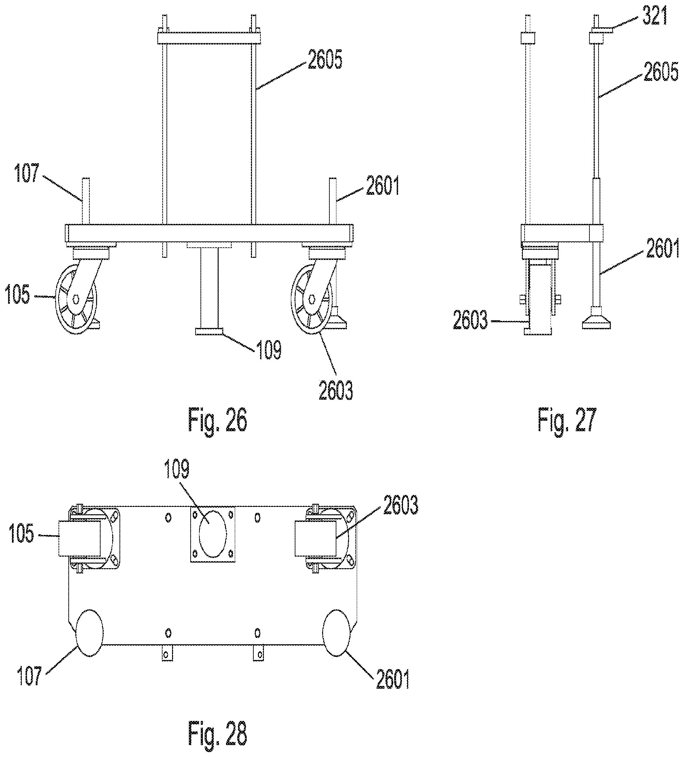

FIG. 1 is a perspective view of the piston and cylinder assembly system 100 of the present invention. The assembly system provides both alignment, insertion and extraction capabilities for large piston and cylinder pairs. The assembly system 100 is supported on a frame 101 such as a steel beam or the like. The assembly system 100 may, be movable to allow setup in various factor locations and also to facilitate storage when not in use. A first carriage 103 can be seen with casters and leveling screws. When the assembly system is placed in the proper location for use, leveling screws are used to ensure that the carriage and overall system are level and without wobble or other movement. This is of importance when operating the assembly system, as an unbalanced assembly system cannot only make assembly or retraction difficult, but it can represent a hazardous situation for the operator or support personnel. A first caster 105 can be seen along with a first leveling screw 107 and a foot operated movement arrester 109. FIGS. 26-29 show the carriage in further detail. The carriage may have two casters or wheels and three leveling screws to provide stability on uneven surfaces such as concrete floors.

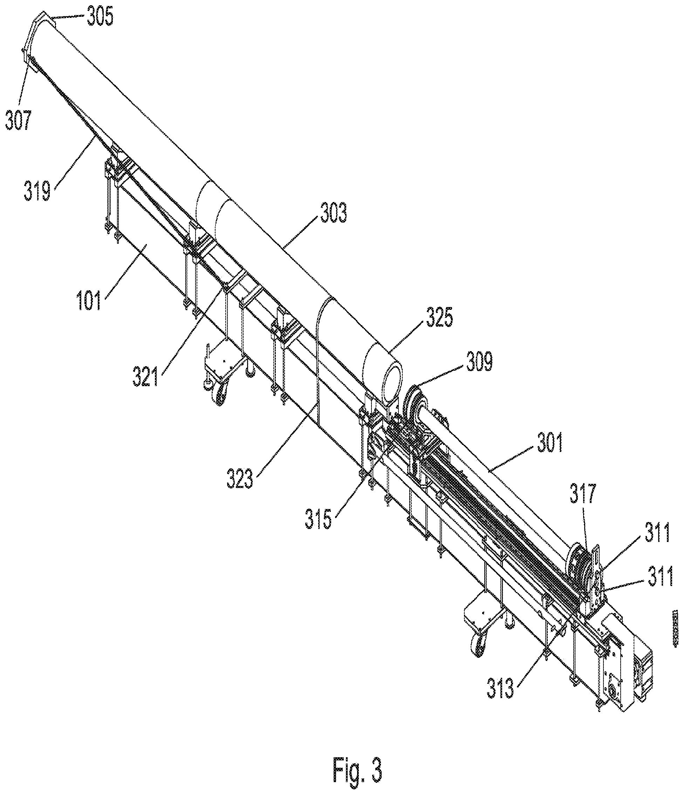

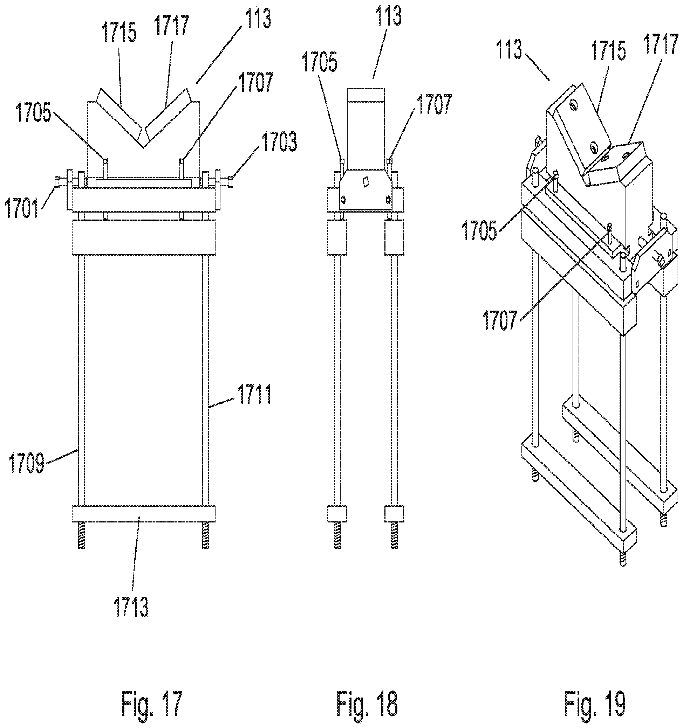

The assembly system 100 has a second carriage 111 with similar casters and leveling screws as the first carriage 103; however, carriage 111 may have one leveling screw and carriage 103 may have two leveling screws so that when the leveling screw is screwed down to lift the system, the system is stabilized on only three points so as not to twist the frame 101. The assembly system 100 supports a cylinder 303 on the left side of the system as seen in FIG. 3 and a piston 301 on the right side of the system as also seen in FIG. 3. Of course, the cylinder may be on the right side and the piston may be on the left side. Additionally, the assembly fixture may be oriented vertically such that the piston may be above the cylinder or, the cylinder may be above the piston. A series of vee blocks facilitates retention and movement of the piston and cylinder pair. A series of vee blocks 113 can be seen in FIG. 1 to provide support to a cylinder being assembled or disassembled. The vee blocks will be further described by way of FIGS. 17-19 as they also provide for vital alignment capabilities. A removable vee block 115 can also be seen on the piston side of the assembly system for support of a piston. The removable vee block 115 can be taken away or otherwise removed once the piston is inserted far enough into the cylinder by using a latch 131.

The removable vee block 115 sits on, for example, support plates 133, and is secured by latches 131 or other fastening devices. A carriage vee block 117 can also be seen attached to a piston support carriage 123 that is driven by a chain or similar arrangement to provide insertion force for the piston to be inserted into the cylinder as well as removal force to extract a piston from a cylinder. A carriage bulkhead 121 provides a surface to push the piston into the cylinder as well as a fastening surface to attach to a piston to be extracted from a cylinder. A chain drive 125 can also be seen that is mechanically coupled to both the piston support carriage 123 and a drive train 127 to provide linear motion to the piston for insertion or removal of the piston to the cylinder. Attached to the frame 101, for storage, is a push rod 129, which will be further described herein, and which serves to facilitate final insertion of the piston in the cylinder.

A guide hole or slot 137 can also be seen on the carriage bulkhead 121. The purpose of the slot 137 is to provide a connection point or pass through for a winch cable or the like to be used in the event of a drive train failure. Also seen in FIG. 1 is a control head 135 for operating the assembly fixture. The control head activates the drive train 127 and provides speed and direction to the carriage to facilitate piston insertion and removal. The control head 135 is an electrical controller, wired or wireless, that controls power to the unit, speed, direction of travel, and the like.

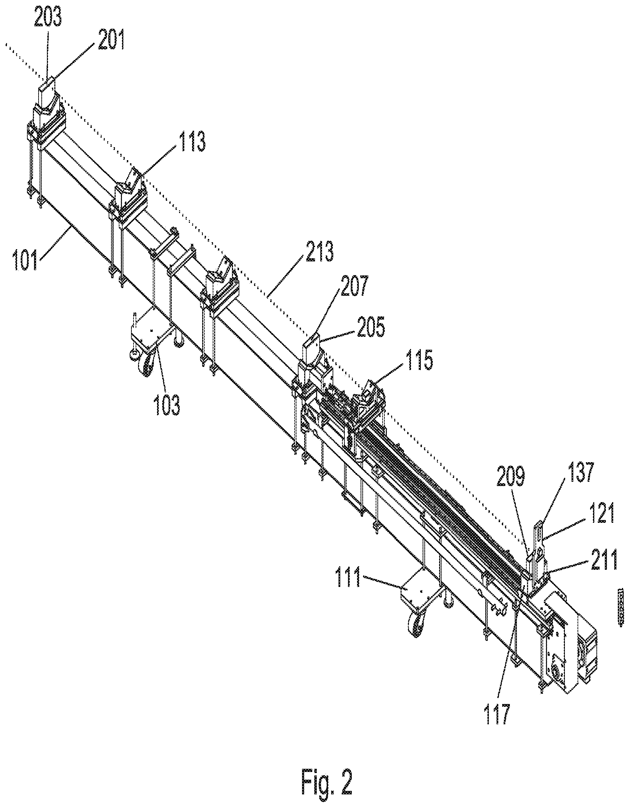

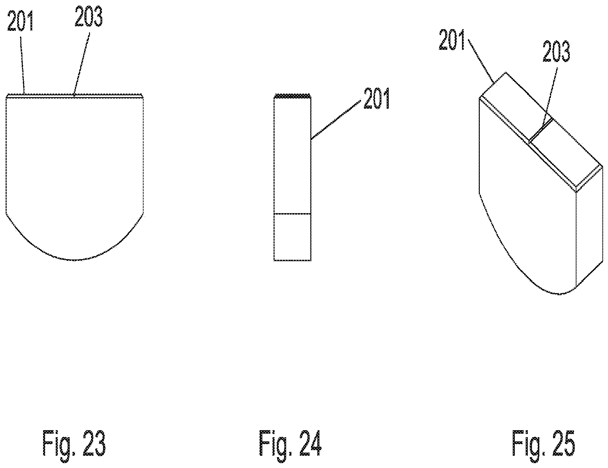

What has been described thus far is an assembly system capable of inserting a piston in a cylinder that may be of large size and mass. While this functionality is important, inserting or removing a piston from a cylinder without damaging O-rings, seals, rings, or the inner wall of the cylinder, is of paramount importance. The assembly system of the present invention further comprises a novel arrangement of adjustments that are used in combination with a laser line and laser alignment blocks to align the series of vee blocks that retain the piston and cylinder, thus ensuring that the piston enters or exits the cylinder in proper axial alignment, thus preventing damage to O-rings, seals, rings, the cylinder, or the piston. FIGS. 23-25 depict a laser alignment block while FIG. 2 shows the laser alignment blocks in use during setup of the accumulator assembly system.

FIG. 2 is a perspective view of the piston and cylinder assembly system with the laser alignment system in place. Laser alignment blocks 201, 205, and 209 are configured to rest in a vee block and have a semi-circular section that conforms to the vee block such that the laser sight is collinear with the centerlines of the piston assembly and the cylinder. This can be seen in FIG. 23. The laser alignment blocks have laser sights 203, 207 (the laser sight for laser alignment block 209 is not visible in FIG. 2) that are small notched out or recessed areas in the laser alignment block where a laser line will travel. A laser 211 can be seen in FIG. 2 attached to the carriage bulkhead 121 with a laser line 213 emanating therefrom. A series of adjustment hardware, such as, but not limited to, adjustment screws, and as will be further described by way of FIG. 17, moves the resting surface of the vee block horizontally or vertically in either direction. The adjustment screws are moved for each vee block until the laser line 213 just passes through the laser alignment sight of each laser alignment block. This alignment process ensures that the vee blocks are in alignment with the axis of the cylinder and the axis of the piston, ensuring proper and straight entry and exit of the piston in the cylinder.

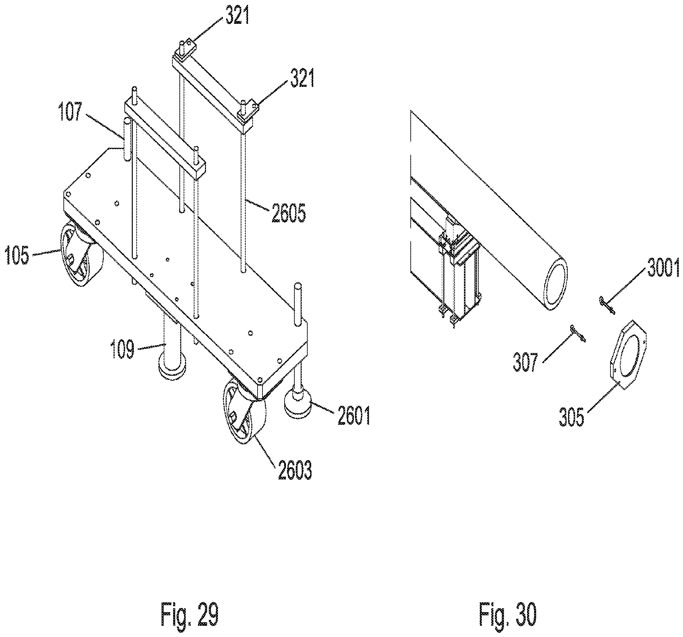

FIGS. 3-8 depict a piston being inserted into a cylinder once the alignment process described above is complete. FIG. 3 is a perspective view of the piston and cylinder assembly system with a piston and a cylinder ready for assembly. Depicted in FIG. 3 is piston 301 resting on vee blocks as well as cylinder 303 resting on vee blocks. To counteract the insertion there and to prevent the cylinder 303 from moving away from the piston during installation, an end stop bracket 305 can be seen fastened to the end of the cylinder 303 and secured with eye bolts 307 (and 3001, see FIG. 30) to a chain 319 that is attached to a grab hook 321 that is in turn fastened to the frame 101. Other mechanical retention means such as pins, bolts, brackets, wedges, blocks, plates, and the like may be used for mechanical retention. To prevent the cylinder from rolling off of the vee blocks, a safety strap 323 or other mechanical retention device is placed around the circumference of the cylinder 303 and secured to the frame 101. The safety strap in one embodiment of the present invention is made from a flexible webbing or strapping such as nylon, polypropylene, or the like. Other retention devices such as hooks, clamps, chains, cable, mesh, clamps, or the like may also be used in singular or plural form.

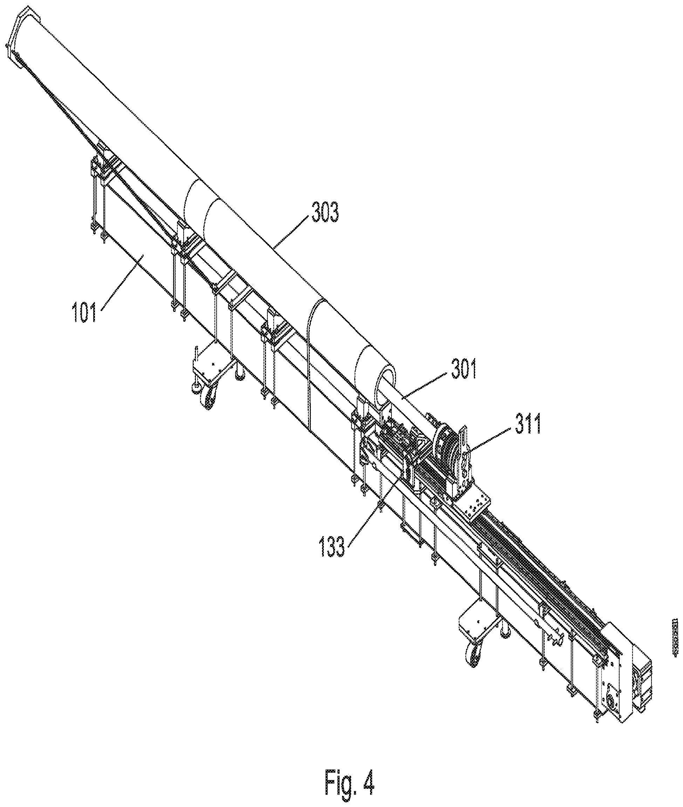

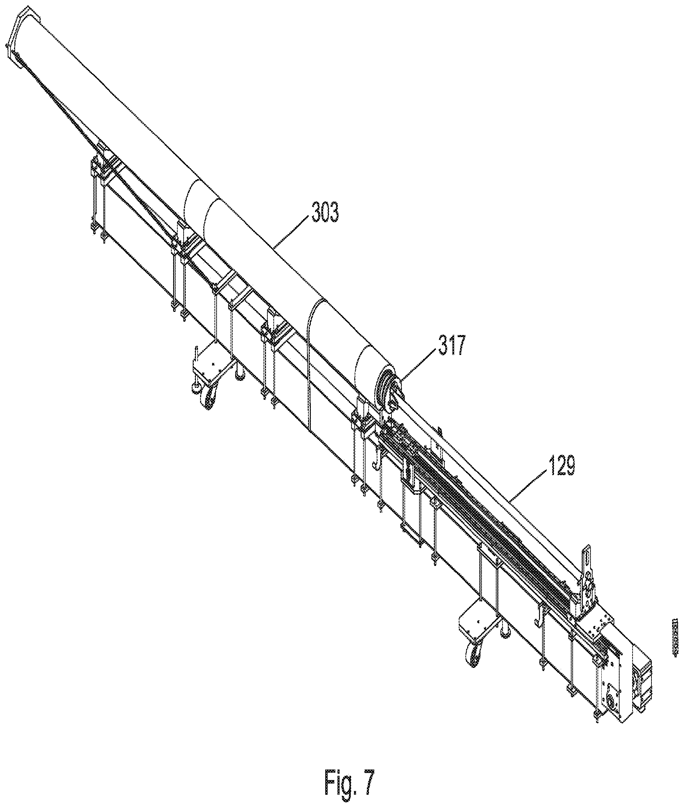

A piston guide adapter 309 may be used at the front of the cylinder to ease installation. The piston guide adapter 309 may be made from a plastic, for example. The carriage can be seen at the rear of the piston to provide linear motion by way of the drive train and chain drive to insert or remove the piston 301 from the cylinder 303. To ensure positive retention of the piston 301 to the carriage, carriage to piston bolts 311 may be employed, particularly when the piston 301 is being removed from the cylinder 303. Once the piston 301 is mostly inserted in the cylinder 303, the push rod 129 (see FIG. 7) is coupled to the carriage by way of a push rod fixture 313 at piston rear 317 to provide adequate insertion clearance. Piston front 315 can be seen entering the cylinder in FIGS. 3 and 4. To further facilitate entry of the piston front 315 into the cylinder 303, a turned down section adapter 325 of the cylinder 303 can be seen where the turned down section adapter 325 may be a machined down cylindrical part. The turned down section adapter 325 is concentric with the inside diameter of the cylinder 303 and ensures that the cylinder inside diameter is concentric with the laser line (213, FIG. 2) and piston (301, FIG. 3). The vee block supporting area for the turned down section adapter 325 is located using its own unique laser alignment block.

FIG. 4 is a perspective view of the piston and cylinder assembly system with piston 301 being inserted in cylinder 303. The piston support carriage 123 (see FIG. 1) can be seen moving the piston 301 into the cylinder 303. The support plates 133 can also be seen in FIG. 4. The piston support carriage moves along a linear path by way of the drive train 127 and related chain drive 125 or the like (see FIG. 1).

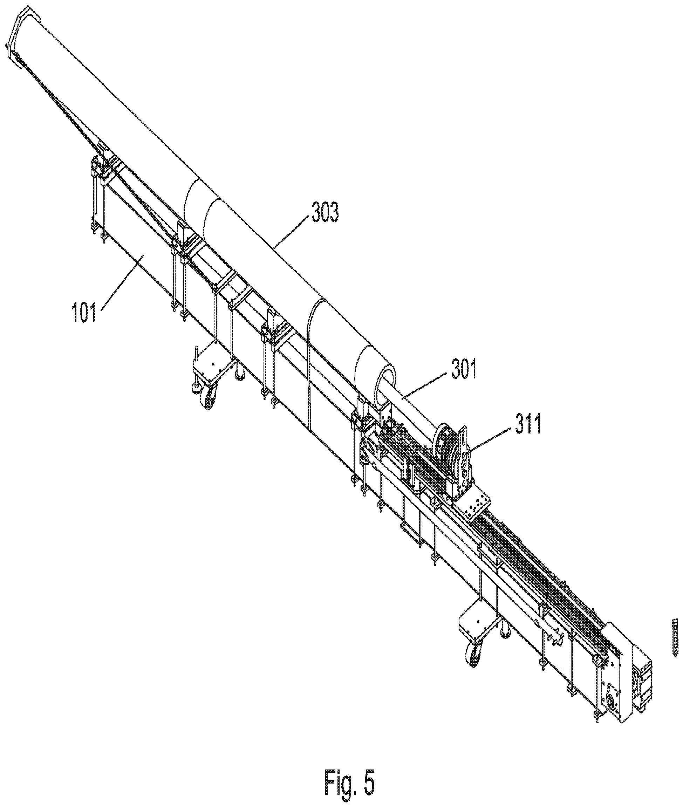

FIG. 5 is a perspective view of the piston and cylinder assembly system with piston 301 being further inserted in cylinder 303 and the removable vee block carriage and removable vee block taken away as the piston 301 advances within the cylinder 303.

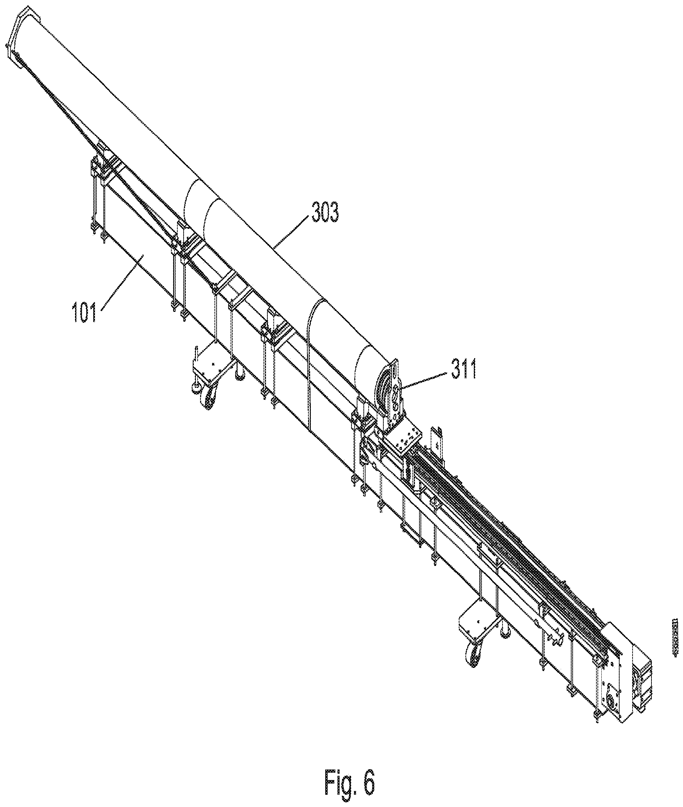

FIG. 6 is a perspective view of the piston and cylinder assembly system with the piston 301 being inserted to the limit of the piston support carriage 123. To facilitate complete insertion of the piston 301 in the cylinder 303, and as seen in FIG. 7, push rod 129 is installed between the piston rear 317 and the piston support carriage 123. The push rod 129 is bolted or otherwise fastened to the piston rear 317 and attached to the carriage bulkhead for final positioning and complete insertion of the piston in the cylinder.

FIG. 7 is a perspective view of the piston and cylinder assembly system with a push rod being used for farther insertion of the piston in the cylinder.

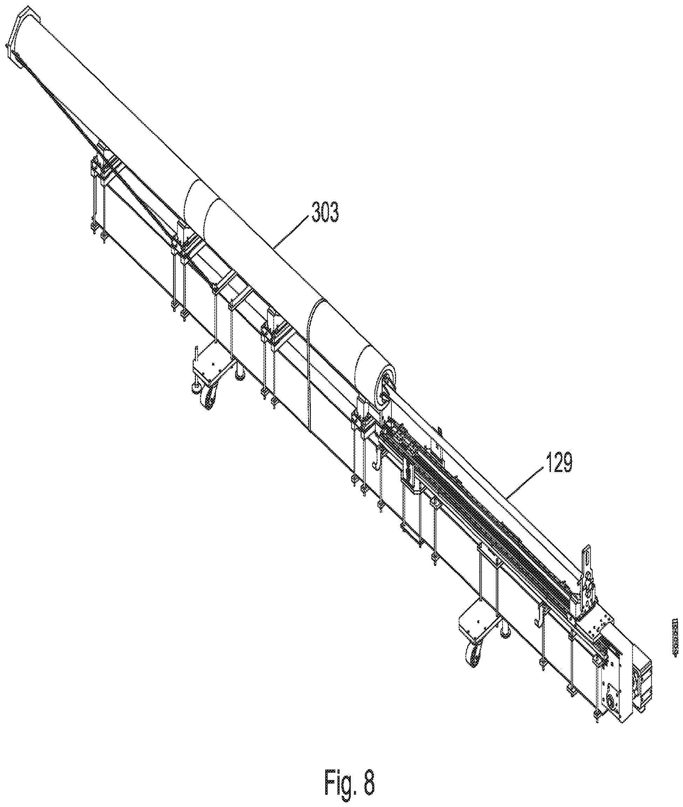

FIG. 8 is a perspective view of the piston and cylinder assembly system with the push rod moving the piston further into the cylinder and the insertion process nearly complete. If the piston and cylinder assembly fixture is used to remove a piston from a cylinder, the method described and depicted by way of FIGS. 1-8 is reversed until the piston is fully extracted without damage.

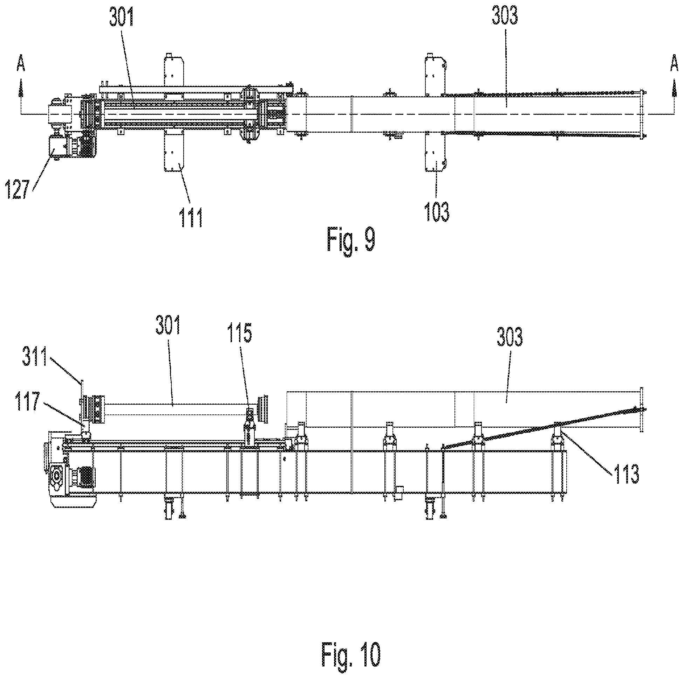

FIG. 9 is a top plan view of the piston and cylinder assembly system with piston 301 and cylinder 303 ready for installation.

FIG. 10 is a side plan view of the piston and cylinder assembly system showing clearly the piston 301 in position along with the cylinder 303 in position and properly braced.

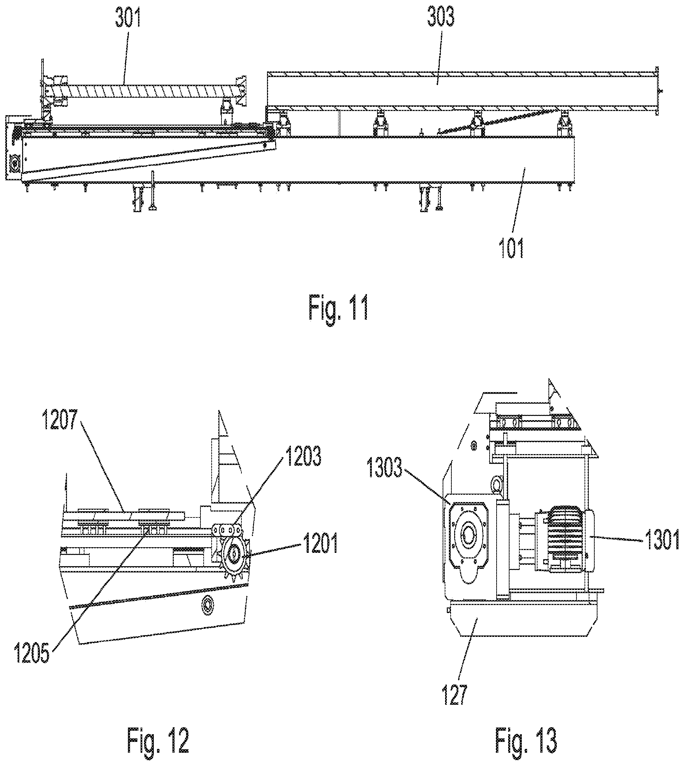

FIG. 11 is a cutaway view of the piston 301 and cylinder assembly system taken along line A-A of FIG. 9.

The piston support carriage 123 (see FIG. 1) moves the piston in a linear manner toward or away from the cylinder 303. Various drive techniques are suitable for such motion, including chain drive 125 and drive train 127 as depicted in FIG. 1. The drive train 127 may comprise, for example, an electric motor, a hydraulic motor, a pneumatic motor, an internal combustion engine, or the like. Other approaches include a worm gear, cables and a drive train, straps and a drive train, a moving belt, and the like. FIG. 12 is a close up view of the chain drive assembly of the piston and cylinder assembly fixture. A sprocket 1201 and a chain drive 125 (see FIG. 1) may be used in combination with drive protrusions 1205 attached to the carriage or vee block assembly. The drive protrusions 1205 interact with chain drive links 1203 of the chain drive 125 in order to move the carriage or vee block assembly by way of the carriage bed 1207. Using drive protrusions 1205 and interaction with chain drive links 1203 creates an intended weak point in the system that will fail before damage to the cylinder or piston ensues. This failsafe drive mechanism results in the drive protrusions 1205 shearing off or being otherwise disengaged from the chain drive should something catastrophic happen during installation or removal of the piston and the cylinder, thus preventing damage to the cylinder or piston being assembled or retracted.

FIG. 13 is a close up view of an exemplary drive train of the piston and cylinder assembly system. While the drive train depicted herein is a drive motor 1301 such as an electric motor and gearbox 1303, other sources of rotational or linear motion may be employed, including but not limited to, hydraulic pumps and motors, internal combustion engines, air or liquid driven motors, and the like.

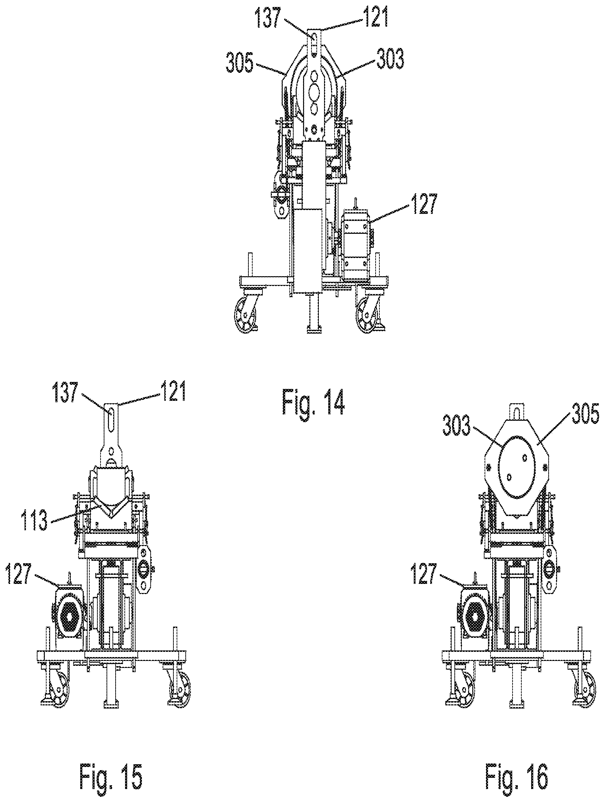

FIG. 14 is an end view of the piston and cylinder assembly system with the cylinder and piston in place showing the carriage bulkhead 121 attached to the piston and the cylinder 303 in the background.

FIG. 15 is an end view of the piston and cylinder assembly system without a cylinder and piston in place where instead a vee block 113 can be clearly seen.

FIG. 16 is an opposite end view of the piston and cylinder assembly system with the cylinder and piston in place. The end stop bracket 305 is secured to the end of the cylinder 303 by way of threads, clamp, bolts, brackets, or the like.

FIG. 17 is a plan view of vee block 113 guide of the piston and cylinder assembly system. The vee block 113 guide comprises a first vee block pad 1715 and a second vee block pad 1717 arranged in a vee shaped configuration. Other geometries that accommodate the cylinder and piston may also be employed, such as, for example, semi-circular or u-shaped blocks. The vee block pads are made from non-marking material such as a plastic or a metal. The vee block pads in use may be greased as the piston slides along each vee block during insertion or removal. The vee block pads are fastened to the vee block 113 guide with bolts, rivets, screws, adhesive, or the like, or may, be integral to the vee block 113 guide. The vee block 113 guide is fastened to the frame 101 (see FIG. 1) by way of fasteners such as a first retention bolt 1709 and a second retention bolt 1711 with a retention bar 1713.

During laser alignment, as previously described herein, the vee blocks can he adjusted horizontally by way of a first horizontal adjustment screw 1701 and a second horizontal adjustment screw 1703 that applies force to the vee block arrangement to displace the vee block in the direction of applied force from the appropriate adjustment screw. In a similar way, a first vertical adjustment screw 1705 and a second vertical adjustment screw 1707 are used to adjust the vertical position of each vee block. After vertical adjustments are made, metal shims may be utilized to strengthen the vee block's foundation at its new elevation. For further definition of the vee block assembly, FIG. 18 is a rotated plan view of the vee block guide of FIG. 17 and FIG. 19 is a perspective view of the vee block guide of FIG. 17.

As previously described, during insertion or removal of the piston from the cylinder, one (or more) of the vee blocks, termed removable vee block 115, is equipped with a release mechanism such as latch or latches 131 to facilitate removal of the vee block at the necessary time during installation or removal of the piston from the cylinder. The latch assembly can be clearly seen. A variety of latches or other retention devices may be employed.

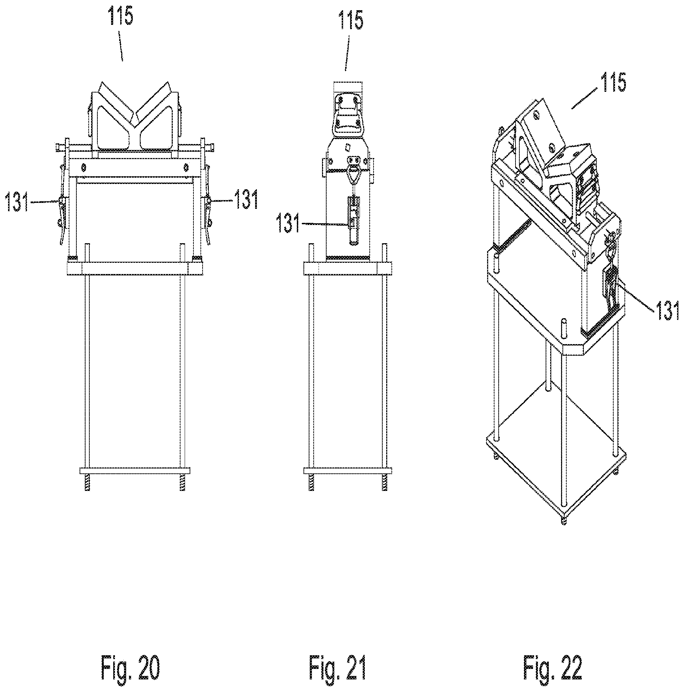

FIG. 20 is a plan view of the removable vee block 115 of the piston and cylinder assembly system and FIG. 21 is a rotated plan view of the removable vee block 115 of FIG. 20. FIG. 22 is a perspective view of the removable vee block 115 of FIG. 20.

FIG. 23 is a plan view of the laser alignment block of the piston and cylinder assembly system. During laser alignment of the piston and cylinder assembly system, and as previously described, the laser line is used to set the correct vertical and horizontal positions of each vee block to ensure proper axial alignment of the piston to the cylinder. Laser alignment blocks 201, during alignment, are used to rest in each vee block and emulate the dimensions and axial center of the cylinder and related piston. The laser alignment sight 203 appears as a notch, channel or opening in the laser alignment block 201. The laser alignment block may be made from a plastic, a metal, wood, or the like. FIG. 24 is a rotated plan view of the laser alignment block 201 of FIG. 23. FIG. 25 is a perspective view of the laser alignment block 201 of FIG. 23.

To make the piston and cylinder assembly system movable for use or storage, a carriage and leveling arrangement is employed. FIG. 26 is a side plan view of a carriage of the piston and cylinder assembly system showing casters 105 and 2603. The casters may be made from a metal such as steel, and have a metal, rubber, or plastic rolling surface. The carriage is attached to the frame 101 (see FIG. 1) by way of mounting bolts 2605. Leveling screws are used to level each carriage and the overall piston and cylinder assembly system and may include three leveling screws amongst two carriages for stability. In FIG. 26, leveling screws 107 and 2601 can be seen. 109 is the foot operated movement arrester. FIG. 27 is a rotated side plan view of the carriage of FIG. 26. FIG. 28 is a bottom plan view of the carriage of FIG. 26 showing casters and leveling screws attached to the carriage. FIG. 29 is a perspective view of the carriage of FIG. 26. Grab hooks 321, attached to the mounting bolts 2605, can be seen. The grab hooks are used to secure the chain 319 (see FIG. 3) during assembly (or disassembly) of a piston and cylinder pair.

FIG. 30 is an exploded detail view of an end stop bracket 305 of the piston and cylinder assembly fixture where two eyebolts 307 and 3001 can be seen. The end stop bracket and use thereof having been previously described herein.

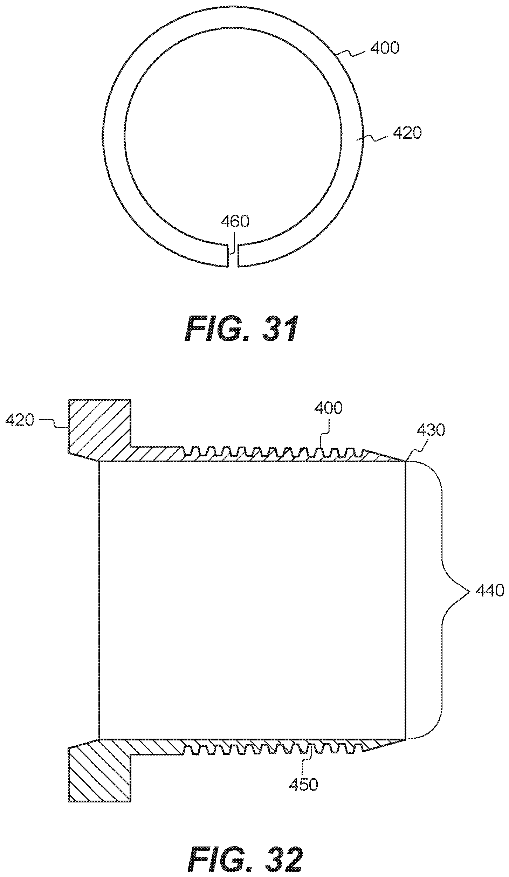

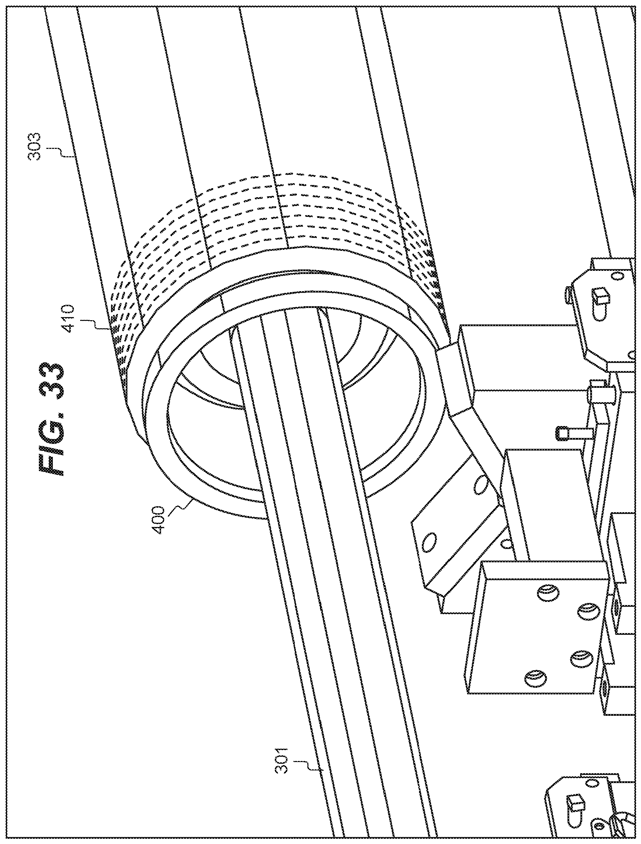

FIG. 31 and FIG. 32 generally depict removable entrance guide protective sleeve 400 that is utilized to protect cylinder 303 while piston 301 is being positioned. In FIG. 33, protective sleeve 400 may generally prevent piston from contacting threaded interior end 410 of cylinder 303. After positioning, the sleeve 400 may be removed. It is understood that it is undesirable for the threaded interior end 410 to be damaged, which may occur during the insertion. It is known that the piston 301 may pick up debris from the threaded interior end 410 and pulling them into cylinder 303. If this occurs, threaded interior end 410 may be damaged and or galled. It is understood that any surface defect can ultimately cause an unwanted leak especially at high pressure.

Sleeve 400 may have a first end 420, a second end 430, a diameter 440, and threads 450 for removably engaging threaded interior end 410. It is understood that sleeve 400 may be screwed in place but may also be press fit or other means of removably inserting into cylinder 303. After full insertion of piston 301, sleeve 400 may be removed from cylinder 303 threaded interior end 410.

Sleeve 400 may have split 460 that may run from first end 420 to second end 430. This may allow for some flexibility for the installation and or removal. Sleeve 400 may be made from but not limited to DuPont^{™} Delrin^{®} acetal homopolymer resin.

It is also understood that although piston and cylinder assembly system described and depicted herein portrays the insertion axis oriented in a horizontal plane with respect to ground, the insertion axis may be oriented in a vertical plane with respect to ground.

The figures and the details provided by them, while describing the assembly system of the present invention, have been presented and described in such a way as to also allow one to make and use the assembly system.

## Claims

1. An accumulator assembly system (100) comprising:
a frame (101);
said frame having a first frame end and a second frame end;
a first carriage (103) and a second carriage (111) wherein said first carriage is coupled to said first frame end and said second carriage is coupled to said second frame end;
said first carriage and said second carriage each comprise one or more casters (105) adapted to allow said frame to roll;
said first carriage and said second carriage each further comprise one or more levelling screws (107) adapted to level and stabilize said frame;
said first carriage and said second carriage each further comprise a movement arrester (109);
a plurality of vee blocks (113) attached to said frame;
said first frame end having one or more vee blocks attached and adapted to hold an accumulator cylinder (303) having a first cylinder end and a second cylinder end; said first frame end further adapted to hold an accumulator cylinder (303) whose length extends beyond the end point of said first frame end;
said second frame end having one or more vee blocks attached to it and adapted to hold an accumulator piston having a first piston end (315) and a second piston end (317) wherein said first piston end comprises a first seal and said second piston end comprises a second seal;
said second cylinder end is removably fastened to said first frame end by a chain (319);
a laser alignment system comprising a laser (213) and a laser alignment block (201, 205, 209) having a laser alignment sight (203, 207);
wherein each vee block is adapted to temporarily receive a laser alignment block and each vee block is further adapted to receive either an accumulator piston or an accumulator cylinder;
adjustment hardware attached to each vee block for aligning each vee block along an insertion axis defined by the laser alignment system;
an accumulator piston support carriage (123) driven in a linear direction by a drive train (127); and
a push rod (129) which is removably attached to the accumulator piston support carriage (123) and to an accumulator piston to be installed or removed from an accumulator cylinder and adapted to allow said accumulator piston to be inserted into said accumulator cylinder such that said accumulator piston is fully encapsulated by said accumulator cylinder;
**characterized in that** it further comprises;
a removable entrance guide protective sleeve (400) adapted to be inserted into said first cylinder end during positioning of said accumulator piston and removed after said positioning.

## Patentansprüche

1. Akkumulatorbaugruppensystem (100), umfassend:
einen Rahmen (101),
wobei der Rahmen ein erstes Rahmenende und ein zweites Rahmenende aufweist,
einen ersten Wagen (103) und einen zweiten Wagen (111), wobei der erste Wagen mit dem ersten Rahmenende gekoppelt ist und der zweite Wagen mit dem zweiten Rahmenende gekoppelt ist,
wobei der erste Wagen und der zweite Wagen jeweils eine oder mehrere Rollen (105) umfassen, die dafür eingerichtet sind, dem Rahmen das Rollen ermöglichen,
wobei der erste Wagen und der zweite Wagen jeweils ferner eine oder mehrere Horizontierschrauben (107) umfassen, die dafür eingerichtet sind, den Rahmen zu nivellieren und zu stabilisieren,
wobei der erste Wagen und der zweite Wagen jeweils ferner einen Bewegungsfeststeller (109) aufweisen,
mehrere V-Blöcke (113), die an dem Rahmen angebracht sind,
wobei das erste Rahmenende einen oder mehrere daran angebrachte V-Blöcke aufweist, die dafür eingerichtet sind, einen Akkumulatorzylinder (303) zu halten, der ein erstes Zylinderende und ein zweites Zylinderende aufweist, wobei das erste Rahmenende ferner dafür eingerichtet ist, einen Akkumulatorzylinder (303) zu halten, dessen Länge sich über den Endpunkt des ersten Rahmenendes hinaus erstreckt,
wobei das zweite Rahmenende einen oder mehrere daran angebrachte V-Blöcke aufweist, die dafür eingerichtet sind, einen Akkumulatorkolben zu halten, der ein erstes Kolbenende (315) und ein zweites Kolbenende (317) aufweist, wobei das erste Kolbenende eine erste Dichtung umfasst und das zweite Kolbenende eine zweite Dichtung umfasst,
wobei das zweite Zylinderende durch eine Kette (319) entfernbar an dem ersten Rahmenende befestigt ist,
ein Laserausrichtungssystem, umfassend einen Laser (213) und einen Laserausrichtungsblock (201, 205, 209) mit einem Laserausrichtungsvisier (203, 207),
wobei jeder V-Block dafür eingerichtet ist, zeitweise einen Laserausrichtungsblock aufzunehmen, und jeder V-Block ferner dafür eingerichtet ist, entweder einen Akkumulatorkolben oder einen Akkumulatorzylinder aufzunehmen,
Justierungs-Hardware, die an jedem V-Block angebracht ist, zum Ausrichten jedes V-Blocks entlang einer Einführungsachse, die durch das Laserausrichtungssystem definiert ist,
einen Akkumulatorkolben-Stützwagen (123), der in einer linearen Richtung durch einen Antriebsstrang (127) angetrieben wird, und
eine Schubstange (129), die entfernbar an dem Akkumulatorkolben-Stützwagen (123) und an einem Akkumulatorkolben angebracht ist, der an einem Akkumulatorzylinder installiert oder von diesem entfernt werden soll, und die dafür eingerichtet ist, zu ermöglichen, dass der Akkumulatorkolben in den Akkumulatorzylinder eingeführt wird, so dass der Akkumulatorkolben vollständig von dem Akkumulatorzylinder umschlossen ist,
**dadurch gekennzeichnet, dass** es ferner Folgendes umfasst:
eine entfernbare Eintrittsführungsschutzhülse (400), die dafür eingerichtet ist, während der Positionierung des Akkumulatorkolbens in das erste Zylinderende eingeführt und nach der Positionierung entfernt zu werden.

## Revendications

1. Système d'assemblage d'accumulateur (100) comportant :
un cadre (101) ;
ledit cadre ayant une première extrémité de cadre et une deuxième extrémité de cadre ;
un premier chariot (103) et un deuxième chariot (111), dans lequel ledit premier chariot est accouplé à ladite première extrémité de cadre et ledit deuxième chariot est accouplé à ladite deuxième extrémité de cadre ;
ledit premier chariot et ledit deuxième chariot comprennent chacun une ou plusieurs roulettes (105) adaptées pour permettre audit cadre de rouler ;
ledit premier chariot et ledit deuxième chariot comprennent chacun par ailleurs une ou plusieurs vis de mise à niveau (107) adaptées pour mettre à niveau et stabiliser ledit cadre ;
ledit premier chariot et ledit deuxième chariot comportent chacun par ailleurs un limiteur de mouvement (109) ;
une pluralité de cales en V (113) attachées audit cadre ;
ladite première extrémité de cadre ayant un ou plusieurs blocs en V attachés et adaptés pour retenir un cylindre d'accumulateur (303) ayant une première extrémité de cylindre et une deuxième extrémité de cylindre ; ladite première extrémité de cadre étant par ailleurs adaptée pour retenir un cylindre d'accumulateur (303) dont la longueur s'étend au-delà du point d'extrémité de ladite première extrémité de cadre ;
ladite deuxième extrémité de cadre ayant un ou plusieurs blocs en V attachés à celle-ci et adaptés pour retenir un piston d'accumulateur ayant une première extrémité de piston (315) et une deuxième extrémité de piston (317), dans lequel ladite première extrémité de piston comporte un premier joint d'étanchéité et ladite deuxième extrémité de piston comporte un deuxième joint d'étanchéité ;
ladite deuxième extrémité de cylindre est fixée de manière amovible à ladite première extrémité de cadre au moyen d'une chaîne (319) ;
un système d'alignement à laser comportant un laser (213) et un bloc d'alignement à laser (201, 205, 209) ayant un viseur d'alignement à laser (203, 207) ;
dans lequel chaque bloc en V est adapté pour recevoir temporairement un bloc d'alignement à laser et chaque bloc en V est par ailleurs adapté pour recevoir soit un piston d'accumulateur, soit un cylindre d'accumulateur ;
du matériel de réglage attaché à chaque bloc en V servant à aligner chaque bloc en V le long d'un axe d'insertion défini par le système d'alignement à laser ;
un chariot de support de piston d'accumulateur (123) entraîné dans une direction linéaire au moyen d'une chaîne cinématique (127) ; et
une tige de poussée (129) qui est attachée de manière amovible au chariot de support de piston d'accumulateur (123) et à un piston d'accumulateur à installer dans un cylindre d'accumulateur ou à retirer de celui-ci, et adaptée pour permettre audit piston d'accumulateur d'être inséré dans ledit cylindre d'accumulateur de manière à ce que ledit piston d'accumulateur soit complètement encapsulé au moyen dudit cylindre d'accumulateur ;
**caractérisé en ce qu'**il comporte par ailleurs :
un manchon protecteur de guidage d'entrée amovible (400) adapté pour être inséré dans ladite première extrémité de cylindre lors du positionnement dudit piston d'accumulateur et retiré après ledit positionnement.
